# EUROPEAN PATENT APPLICATION

(11) **EP 4 848 448 A1**
(43) Date of publication of application: **02.12.2026**
(21) Application number: 25861290.2
(22) Date of filing: 26.08.2025
(51) Int. Cl.: H01M 50/367, H01M 10/6556, H01M 10/613, H01M 50/342, H01M 50/383, H01M 50/317, H01M 50/375, H01M 50/249

(54) **BATTERY PACK AND VEHICLE INCLUDING SAME**

(30) Priority: 28.08.2024 KR 20240116139
(71) Applicant: LG Energy Solution, Ltd., Seoul 07335 (KR)
(72) Inventor: CHOI, Beom-Seok, Daejeon 34122 (KR); PARK, Gi-Chan, Daejeon 34122 (KR); KIM, Soo-Youl, Daejeon 34122 (KR); CHANG, Hyuk-Kyun, Daejeon 34122 (KR)
(74) Representative: Plasseraud IP
(86) International application number: PCT/KR2025/013003
(87) International publication number: WO 2026/049476

(57) **Abstract**

A battery pack according to the present disclosure includes: at least one battery assembly including a plurality of battery cells and having a vent hole on a first direction side; a pack case in which an accommodation space configured to accommodate the battery assembly is formed; and a cooling and venting member disposed on the first direction side of the battery assembly. The cooling and venting member includes a venting unit configured to allow vent gas discharged from the vent hole to flow therethrough, and a cooling unit configured to cool the battery assembly.

## Description

### TECHNICAL FIELD

The present disclosure relates to a battery pack and a vehicle including the same.

This application is based on and claims priority from Korean Patent Application No. 10-2024-0116139 filed on August 28, 2024, with the Korean Intellectual Property Office, the disclosure of which is incorporated herein in its entirety by reference.

### BACKGROUND ART

Secondary batteries, which have high applicability depending on the product group and electrical characteristics such as high energy density, are universally applied not only to portable devices but also to electric vehicles (EVs) or hybrid vehicles (HEVs) that are driven by electrical driving sources. Such secondary batteries are attracting attention as a new energy source for enhancing eco-friendliness and energy efficiency, not only because they have the primary advantage of drastically reducing the use of fossil fuels, but also because they generate no by-products from the use of energy.

Types of currently and widely used secondary batteries include, for example, lithium ion batteries, lithium polymer batteries, nickel cadmium batteries, nickel hydrogen batteries, and nickel zinc batteries. When a high output voltage is required, a battery module or a battery pack may be configured by connecting a plurality of battery cells in series. In addition, in order to increase charge and discharge capacity, a battery module or a battery pack may also be configured by connecting a plurality of battery cells in parallel. Accordingly, the number of battery cells included in the battery module or pack may be variously set depending on the required output voltage or charge and discharge capacity.

When a battery pack is configured by connecting a plurality of battery cells in series and/or in parallel, it is common to first configure a battery module including at least one battery cell, and to configure a battery pack or a battery rack by using the at least one battery module and adding other components.

### DISCLOSURE

### Technical Problem

The present disclosure provides a battery pack capable of effective venting and cooling, and a vehicle including the same.

The present disclosure provides a battery pack having improved energy density, and a vehicle including the same.

The present disclosure provides a battery pack having improved productivity, and a vehicle including the same.

The present disclosure provides a battery pack capable of effectively suppressing or preventing a heat transfer phenomenon, and a vehicle including the same.

In addition, the present disclosure provides a battery pack capable of effectively suppressing or preventing vent gas from being directed to a driver, other battery cells, or other battery assemblies, and a vehicle including the same.

Furthermore, the present disclosure provides a battery pack capable of effectively blocking the inflow of a cooling medium or vent gas into other places, and a vehicle including the same.

The technical problems to be solved by the present disclosure are not limited to the above-mentioned problems, and other problems not mentioned above may be clearly understood by a person ordinarily skilled in the art from the description of the present disclosure set forth below.

### Technical Solution

A battery pack according to the present disclosure includes: at least one battery assembly including a plurality of battery cells and having a vent hole on a first direction side; a pack case in which an accommodation space configured to accommodate the battery assembly is formed; and a cooling and venting member disposed on the first direction side of the battery assembly. The cooling and venting member includes a venting unit configured to allow vent gas discharged from the vent hole to flow therethrough, and a cooling unit configured to cool the battery assembly.

The first direction may be a downward direction.

The venting unit and the cooling unit may be provided together in a single layer.

The venting unit and the cooling unit may be alternately arranged in a region of the cooling and venting member corresponding to the battery assembly.

The cooling and venting member may further include a first partition wall that partitions the venting unit and the cooling unit.

The first partition wall may protrude in the first direction.

The venting unit and the cooling unit may be integrally formed.

The vent hole may include a first vent hole disposed substantially at a central side of the battery assembly, and a second vent hole disposed outside of the first vent hole in the battery assembly.

The venting unit may include a first venting portion configured to communicate with the first vent hole, a second venting portion configured to communicate with the second vent hole, and a third venting portion configured to communicate with the first venting portion and the second venting portion.

The cooling unit may be disposed between the first venting portion and the second venting portion.

The cooling and venting member may further include a second partition wall provided inside the cooling unit and configured to change a flow direction of a cooling medium.

The cooling and venting member may further include a third partition wall provided inside the venting unit and configured to increase a flow distance of vent gas.

The pack case may include a bottom plate disposed on a first direction side of the cooling and venting member.

The battery pack according to the present disclosure may further include a flame-retardant sheet disposed between the battery assembly and the cooling and venting member.

The battery pack according to the present disclosure may further include at least one electric component, and the electric component may be disposed on a second direction side of the battery assembly.

The battery pack according to the present disclosure may further include a venting device configured to allow communication between the venting unit and the outside.

A vehicle according to the present disclosure includes at least one battery pack according to the present disclosure.

### Advantageous Effects

The present disclosure may provide a battery pack capable of effective venting and cooling, and a vehicle including the same.

According to an aspect of the present disclosure, a battery pack having improved energy density and a vehicle including the same may be provided.

According to an aspect of the present disclosure, a battery pack having improved productivity and a vehicle including the same may be provided.

According to an aspect of the present disclosure, a battery pack capable of effectively suppressing or preventing a heat transfer phenomenon and a vehicle including the same may be provided.

In addition, according to an aspect of the present disclosure, a battery pack capable of effectively suppressing or preventing vent gas from being directed to a driver, other battery cells, or other battery assemblies, and a vehicle including the same may be provided.

Furthermore, according to an aspect of the present disclosure, a battery pack capable of effectively blocking cooling medium or vent gas from flowing into other areas, and a vehicle including the same may be provided.

The effects of the present disclosure are not limited to the aforementioned effects, and other effects not mentioned may be clearly understood by those ordinarily skilled in the art from the present specification and the accompanying drawings.

### DESCRIPTION OF DRAWINGS

The following drawings attached hereto illustrate embodiments of the present disclosure and serve to further understand the technical idea of the present disclosure together with the content of the disclosure described above. Therefore, the present disclosure should not be construed as being limited to the matters illustrated in the drawings.
FIG. 1 is a perspective view illustrating an overall configuration of a battery pack according to an embodiment of the present disclosure.
FIG. 2 is an exploded perspective view of the battery pack in which a cooling and venting member is separated, according to an embodiment of the present disclosure.
FIG. 3 is a bottom view of the battery pack in which the cooling and venting member is removed, according to an embodiment of the present disclosure.
FIG. 4 is a bottom view illustrating the cooling and venting member according to an embodiment of the present disclosure.
FIG. 5 is a bottom view illustrating the flow of vent gas in a venting unit of the cooling and venting member according to an embodiment of the present disclosure.
FIG. 6 is a bottom view illustrating the flow of cooling medium in a cooling unit of the cooling and venting member according to an embodiment of the present disclosure.
FIG. 7 is a perspective view illustrating an overall configuration of a battery assembly according to an embodiment of the present disclosure.
FIG. 8 is a perspective view illustrating the battery assembly according to an embodiment of the present disclosure as viewed from a different direction.
FIG. 9 is a perspective view illustrating an overall configuration of a battery cell according to an embodiment of the present disclosure.
FIG. 10 is an enlarged bottom view of a portion of the cooling unit of the cooling and venting member according to an embodiment of the present disclosure, illustrating the flow of cooling medium.
FIG. 11 is an enlarged bottom view of a portion of the venting unit of the cooling and venting member according to an embodiment of the present disclosure, illustrating the flow of vent gas.
FIG. 12 is a bottom view illustrating a cooling and venting member according to a modification of the present disclosure.
FIG. 13 is an exploded perspective view illustrating a battery pack according to another embodiment of the present disclosure.
FIG. 14 is a side cross-sectional view illustrating a portion in which a venting unit and a cooling unit are illustrated in a battery pack according to another embodiment of the present disclosure.
FIG. 15 is an enlarged perspective view of region B of FIG. 12, illustrating a state where sealing members are disassembled.
FIG. 16 is an enlarged perspective view of region B of FIG. 12, illustrating a state in which the bottom plate is bolted to the cooling and venting member.
FIG. 17 is an exploded perspective view illustrating a battery pack according to another embodiment of the present disclosure.
FIG. 18 is a side cross-sectional view illustrating the flow of vent gas when a thermal event occurs in the battery pack according to another embodiment of the present disclosure.
FIG. 19 is a perspective view illustrating a state in which a pack cover is removed from a battery pack according to an embodiment of the present disclosure.
FIG. 20 is a cross-sectional perspective view illustrating a side channel in a battery pack according to an embodiment of the present disclosure.
FIG. 21 is a perspective view illustrating the battery pack shown in FIG. 1 from another direction.
FIG. 22 is a view illustrating a vehicle according to an embodiment of the present disclosure.

Corresponding reference characters indicate corresponding components throughout the several views of the drawings. The drawing figures presented are illustrated for simplicity and clarity and have not necessarily been drawn to scale. For example, the dimensions of some of the elements in the figures may be exaggerated relative to other elements to help to improve understanding of various embodiments. Also, common but well-understood elements that are useful or necessary in a commercially feasible embodiment are often not depicted in order to facilitate a less obstructed view of these various embodiments.

### BEST MODE

Hereinafter, embodiments of the present disclosure will be described in detail with reference to the accompanying drawings. Prior to this, the terms or words used in the specification and claims should not be construed as limited to their ordinary or dictionary meanings, but should be construed in accordance with meanings and concepts consistent with the technical idea of the present disclosure based on the principle that an inventor may appropriately define the concepts of terms in order to explain their invention in the best way.

Accordingly, since the embodiments described in this description and the configurations illustrated in the drawings are merely some embodiments of the present disclosure, and do not represent all of the technical ideas of the present disclosure, it should be understood that at the time of filing, there may be various equivalents and modifications that could serve as alternatives to the embodiments.

When a large number of battery cells are included in a battery pack, the battery pack may be vulnerable to thermal chain reactions between battery cells or between battery modules. For example, when a thermal event such as thermal runaway occurs in any one of the battery cells, such a thermal event may propagate to other battery cells or battery modules. When such thermal runaway propagation is not properly suppressed, the thermal event that occurred in a specific battery cell may cause a chain reaction in other battery cells or battery modules, leading to serious problems such as explosions or fires.

To address this, the battery pack includes venting means for smoothly discharging, for example, high-temperature vent gas discharged from the battery cells or battery modules, and cooling means for cooling the battery cells or battery modules. Meanwhile, in conventional battery packs, the venting means such as a venting unit, and the cooling means such as a cooling unit, were mainly arranged on different sides of the battery pack. In such conventional battery packs, since separate spaces had to be provided for arranging the venting means and the cooling means, there were limitations in the space available to accommodate the battery cells or battery assemblies in the battery pack. As a result, it was difficult to increase the energy density of the battery pack. In addition, since the venting means and the cooling means had to be provided as separate components, the overall cost of the battery pack was also high. Furthermore, since the venting means and the cooling means were arranged on different sides, the vent gas flowing through the venting means was difficult to be effectively cooled during the flow process, making it vulnerable to heat transfer.

The present disclosure provides a battery pack capable of effective venting and cooling, and a vehicle including the same, in consideration of such points. For example, the present disclosure provides a battery pack capable of effectively suppressing or preventing vent gas from being directed to a driver, other battery cells, or other battery assemblies, and a vehicle including the same.

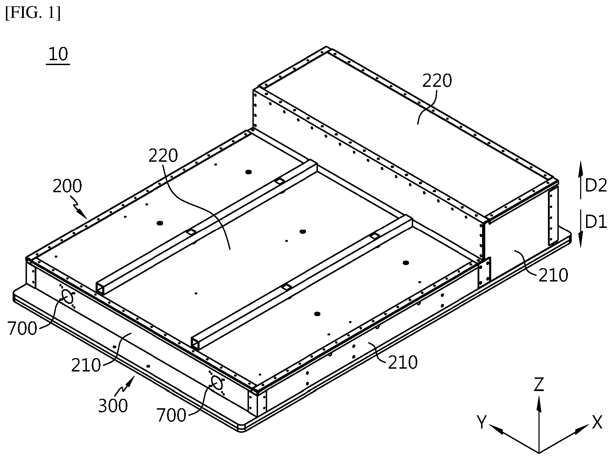

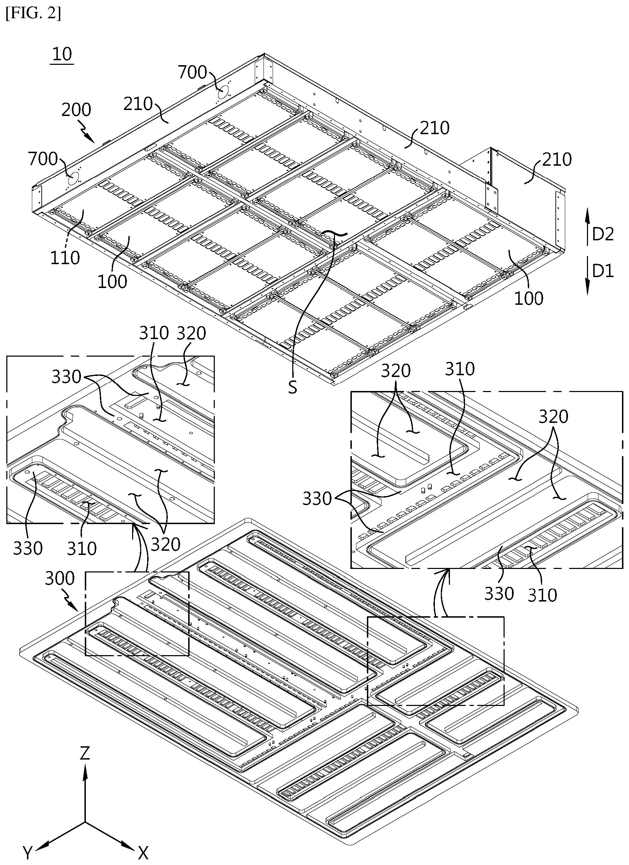

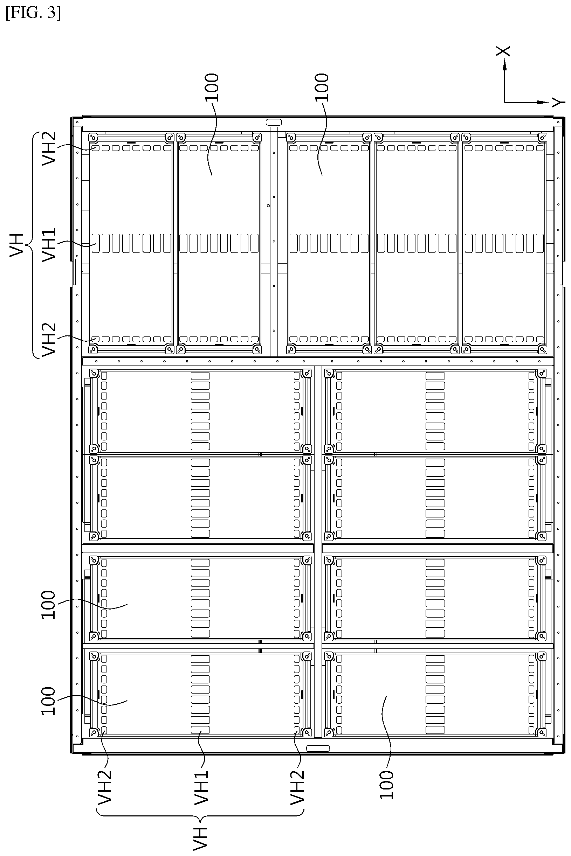

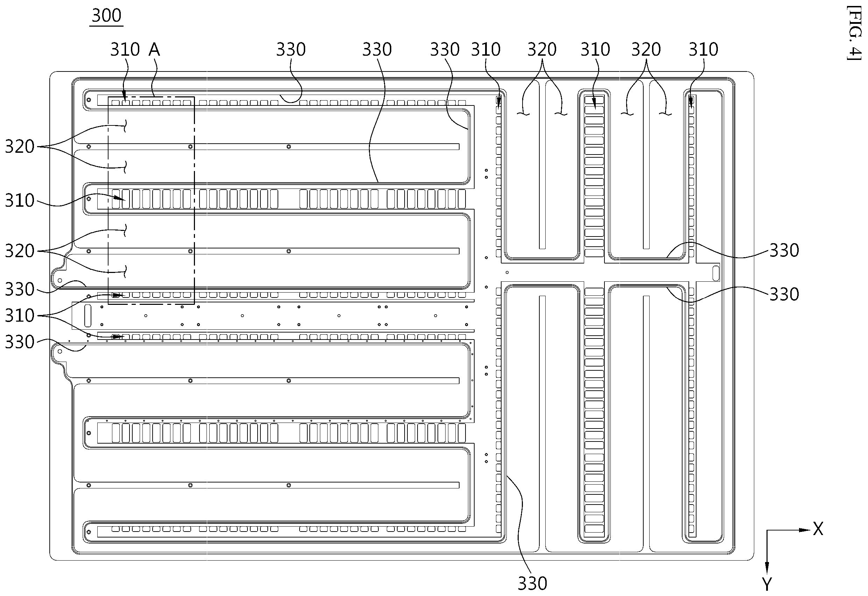

FIG. 1 is a perspective view illustrating an overall configuration of a battery pack according to an embodiment of the present disclosure. FIG. 2 is an exploded perspective view of the battery pack in which a cooling and venting member is separated, according to an embodiment of the present disclosure. FIG. 3 is a bottom view of the battery pack in which the cooling and venting member is removed, according to an embodiment of the present disclosure. FIG. 4 is a bottom view illustrating the cooling and venting member according to an embodiment of the present disclosure.

Hereinafter, a battery pack 10 according to an embodiment of the present disclosure will be described in detail with reference to FIGS. 1 to 4. The battery pack 10 according to an embodiment of the present disclosure may include a battery assembly 100, a pack case 200, and a cooling and venting member 300.

The battery assembly 100 may include a plurality of battery cells 110. For example, as illustrated in FIG. 3, a vent hole VH may be provided on a first direction D1 side of the battery assembly 100. Here, the first direction D1 may be, for example, a -Z direction. At least one battery assembly 100 may be provided. Alternatively, a plurality of battery assemblies 100 may be provided.

The battery assembly 100 may have a predetermined width, length, and height. For example, the battery assembly 100 may have a predetermined width, length, and height in the X-axis, Y-axis, and Z-axis directions. Alternatively, the battery assembly 100 may have a predetermined width, length, and height in the Y-axis, X-axis, and Z-axis directions.

The vent hole VH may be a hole through which vent gas VG is discharged. When a thermal event occurs in one or more battery cells 110, for example, high-temperature gas, flame, and/or ejected material may be discharged from the battery cells 110, and such high-temperature gas, flame, and/or ejected material may be collectively referred to as vent gas VG. The battery assembly 100 may include a plurality of vent holes VH respectively corresponding to the plurality of battery cells 110.

The battery assembly 100 may be accommodated in the pack case 200. An accommodation space S configured to accommodate the battery assembly 100 may be defined inside the pack case 200. A plurality of battery assemblies 100 may be accommodated in the accommodation space S. The plurality of battery assemblies 100 may be arranged in various structures or layouts inside the accommodation space S. For example, some of the plurality of battery assemblies 100 may be arranged in rows along the X-axis direction, and may each have a predetermined width in the X-axis direction. In addition, the remaining ones of the plurality of battery assemblies 100 may be arranged in rows along the Y-axis direction, and may each have a predetermined width in the Y-axis direction. However, the structure or layout of the plurality of battery assemblies 100 is not limited thereto.

The cooling and venting member 300 may be disposed on a first direction D1 side of the battery assembly 100. A direction opposite to the first direction D1 may be a second direction D2. The second direction D2 may be, for example, a +Z direction. The battery assembly 100 may be disposed on the second direction D2 side of the cooling and venting member 300.

The cooling and venting member 300 may include, for example, a venting unit 310 and a cooling unit 320, as illustrated in FIG. 4. The venting unit 310 may have a configuration provided to allow the flow of vent gas VG discharged from the vent hole VH of the battery assembly 100. For example, a flow path through which the vent gas VG flows may be provided in the venting unit 310. The vent gas VG may be discharged through the vent hole VH, flow through the venting unit 310, and be discharged to the outside of the battery pack 10.

The venting unit 310 may be in communication with the vent hole VH. The venting unit 310 may be provided at a position corresponding to the vent hole VH. The venting unit 310 may be in communication with the vent holes VH of the respective ones of the plurality of battery assemblies 100.

The venting unit 310 may be configured to pass through a plurality of battery assemblies 100. For example, the plurality of battery assemblies 100 may be stacked and arranged inside the pack case 200, and at least a portion of the venting unit 310 may be configured to extend along the stacking direction of the battery assemblies so as to pass through one side of the plurality of battery assemblies 100.

The cooling unit 320 may be configured to cool the battery assemblies 100. The cooling unit 320 may also cool the vent gas VG. A cooling medium R may flow through the cooling unit 320. For example, a flow path through which the cooling medium R flows may be provided in the cooling unit 320.

The cooling medium R may be supplied from the outside of the battery pack 10 and discharged to the outside, or may circulate inside the battery pack 10.

The cooling unit 320 may not be in communication with the vent hole VH. The cooling unit 320 may be provided at a position that does not correspond to the vent hole VH. However, the cooling unit 320 may be provided at a position adjacent to the battery assembly 100 or in contact with the battery assembly 100. The cooling unit 320 may be configured to pass through a plurality of battery assemblies 100. At least a portion of the cooling unit 320 may extend in a lengthwise direction so as to pass through the plurality of battery assemblies 100.

The battery pack 10 according to the present disclosure includes a cooling and venting member 300 having both the venting unit 310 and the cooling unit 320 to be capable of effective venting and cooling.

In addition, in the battery pack 10, since the venting unit 310 and the cooling unit 320 may both be arranged on the same side, the space occupied by the venting unit 310 and the cooling unit 320 may be reduced, thereby improving the energy density of the battery pack 10.

In addition, since the venting unit 310 and the cooling unit 320 may be provided as a single component, an improvement in productivity such as overall cost reduction of the battery pack 10 may be expected.

Furthermore, arrangement of both the venting unit 310 and the cooling unit 320 on the same side enables the vent gas VG flowing through the venting unit 310 to be effectively cooled by the adjacent cooling unit 320 during the flow process, allowing the flow energy of the vent gas VG to be rapidly reduced, and a heat transfer phenomenon to be effectively suppressed or prevented.

Meanwhile, as illustrated in FIGS. 1 and 2, the pack case 200 may include side walls 210 disposed in side portions of the battery pack 10. The side walls 210 may be disposed, for example, on the X-axis direction sides and the Y-axis direction sides of the battery pack 10, respectively. The side walls 210 may surround the accommodation space S for the battery assembly 100 in a horizontal direction.

In addition, the pack case 200 may include a pack cover 220. The pack cover 220 may be configured to cover the accommodation space S for the battery assembly 100 in a vertical direction.

In the above description, the first direction D1 may be a downward direction. In this case, the cooling and venting member 300 may said to be disposed below the battery assembly 100. In this case, the venting unit 310 and the cooling unit 320 may be said to be disposed below the battery assembly 100.

In a vehicle in which the battery pack 10 is mounted, generally, an occupant such as the driver is positioned above the battery cells 110. When a thermal event occurs and the vent gas VG is discharged upward from the battery cells 110, it may pose a significant safety risk to the occupant. Therefore, as in the present disclosure, when the cooling and venting member 300 is disposed below the battery assembly 100, the vent gas VG may be guided downward, which is opposite to the occupant's side.

As in the present disclosure, when the cooling and venting member 300 is disposed below the battery assembly 100, the vent gas VG is guided downward, allowing a heat transfer phenomena to be minimized.

The venting unit 310 and the cooling unit 320 of the cooling and venting member 300 may be provided together in a single layer. The venting unit 310 and the cooling unit 320 may be arranged in a single layer on the first direction D1 side of the battery assembly 100. For example, the venting unit 310 and the cooling unit 320 may be provided at substantially the same height with respect to each other. For example, the venting unit 310 and the cooling unit 320 may be provided at substantially the same position with respect to the Z-axis. In addition, the venting unit 310 and the cooling unit 320 may be arranged together on a plane. For example, the venting unit 310 and the cooling unit 320 may be arranged together on an X-Y plane, which is perpendicular to the Z-axis, without being stacked in the Z-axis direction.

As described above, providing the venting unit 310 and the cooling unit 320 together in a single layer may minimize the space occupied by the venting unit 310 and the cooling unit 320 and hence maximize the energy density of the battery pack 10. Further cost reduction of the battery pack 10 may also be expected. In addition, the cooling of the vent gas VG flowing through the venting unit 310 may be performed more effectively.

The venting unit 310 and the cooling unit 320 of the cooling and venting member 300 may be alternately arranged. For example, the venting unit 310 and the cooling unit 320 may be alternately arranged in a region of the cooling and venting member 300 corresponding to the battery assembly 100. According to an embodiment, the venting unit 310 and the cooling unit 320 may alternately correspond to one battery assembly 100.

Referring to portion A illustrated in FIG. 4, portion A represents a region of the cooling and venting member 300 corresponding to one battery assembly 100.

In portion A of FIG. 4, the venting unit 310 and the cooling unit 320 are illustrated as being alternately arranged along the Y-axis direction. For example, the cooling unit 320 may be disposed between two venting units 310 that are spaced apart from each other in the Y-axis direction. In addition, the venting unit 310 may be disposed between two cooling units 320 that are spaced apart from each other in the Y-axis direction.

As described above, alternate arrangement of the venting unit 310 and the cooling unit 320 allows venting to be performed at various positions of the battery assembly 100, and allows the battery assembly 100 to be cooled more evenly. Accordingly, the vent gas VG may be discharged more effectively from the battery assembly 100, and the cooling performance of the cooling unit 320 may be improved. In addition, there is an advantage in that both venting and cooling may be effectively performed on a first side of the battery assembly 100.

According to an embodiment, the cooling and venting member 300 may further include a first partition wall 330, as illustrated in FIGS. 2 and 4.

The first partition wall 330 may be configured to partition the venting unit 310 and the cooling unit 320. For example, the first partition wall 330 may be configured to physically block the internal flow path of the venting unit 310 and the internal flow path of the cooling unit 320 to seal the internal flow paths, preventing communication therebetween.

According to an embodiment, the first partition wall 330 may be provided in the form of a partition. For example, as illustrated in FIGS. 2 and 4, the first partition wall 330 may be configured to physically partition the venting unit 310 and the cooling unit 320 in the form of a partition elongated in the X-axis direction or the Y-axis direction.

When the cooling and venting member 300 further includes the first partition wall 330 as described above, the venting unit 310 and the cooling unit 320 may be more clearly separated. In addition, effective blocking of the venting unit 310 and the cooling unit 320 may effectively block inflow of the cooling medium R into the venting unit 310 or inflow of the vent gas VG into the cooling unit 320. Furthermore, since the first partition wall 330 allows the venting unit 310 and the cooling unit 320 to be simultaneously provided, cost reduction and improved productivity of the cooling and venting member 300 may be expected.

The first partition wall 330 may protrude in the first direction D1, for example, as illustrated in FIG. 2. Accordingly, the first partition wall 330 may have a thickness in the first direction D1 or in a second direction D2. The height of the flow path of the vent gas VG in the venting unit 310 and the height of the flow path of the cooling medium R in the cooling unit 320 may increase in proportion to the degree of protrusion of the first partition wall 330.

As the first partition wall 330 protrudes in the first direction D1, the venting unit 310 and the cooling unit 320 may be more effectively formed in the cooling and venting member 300. In addition, by changing only the degree of protrusion of the first partition wall 330, the size of each flow path of the venting unit 310 and the cooling unit 320 may be adjusted, which may lower the design difficulty of the cooling and venting member 300.

According to an embodiment, the venting unit 310 and the cooling unit 320 may be integrally formed. For example, in the cooling and venting member 300, the venting unit 310 and the cooling unit 320 may be manufactured as a single component. For example, the cooling and venting member 300 may be manufactured by press-forming a plate-shaped metal member.

As described above, when the venting unit 310 and the cooling unit 320 are integrally formed, the productivity of the cooling and venting member 300 may be further improved. In addition, the venting unit 310 and the cooling unit 320 may be provided in a more tightly and firmly integrated manner.

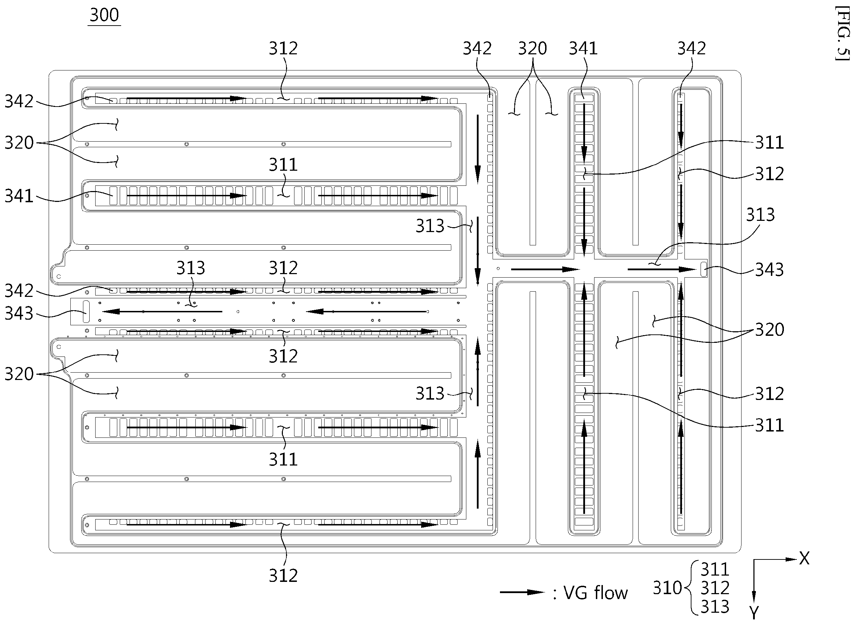

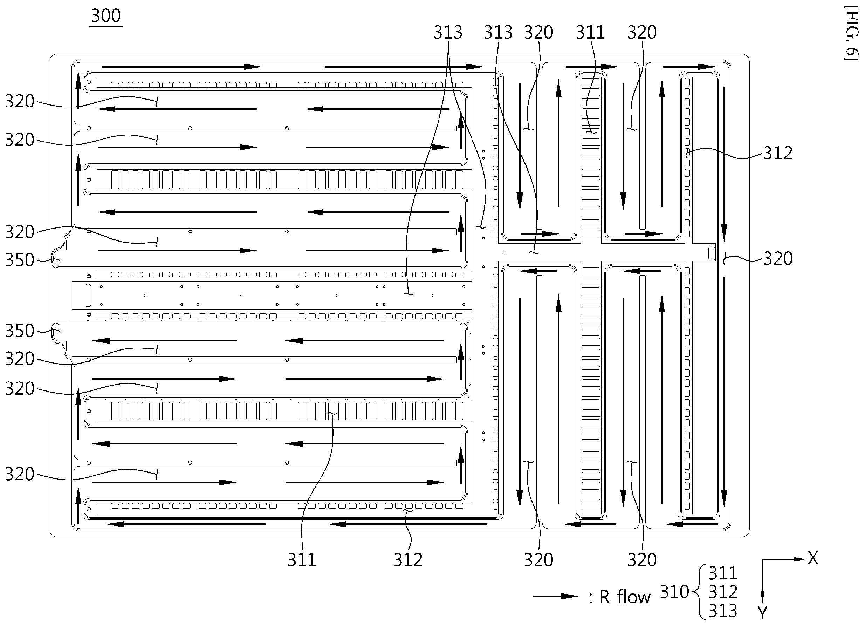

FIG. 5 is a bottom view illustrating the flow of vent gas in the venting unit of the cooling and venting member 300 according to an embodiment of the present disclosure, and FIG. 6 is a bottom view illustrating the flow of cooling medium in the cooling unit of the cooling and venting member 300 according to an embodiment of the present disclosure. In FIGS. 5 and 6, the vent gas in the venting unit and the cooling medium in the cooling unit may flow along the directions indicated by the arrows.

Hereinafter, the cooling and venting member 300 according to an embodiment of the present disclosure will be described in more detail with reference to FIGS. 1 to 6.

The vent hole VH may include, for example, a first vent hole VH1 and a second vent hole VH2, as illustrated in FIG. 3. The first vent hole VH1 may be disposed substantially at a central portion of the battery assembly 100. The first vent hole VH1 may be disposed approximately at a central portion of a first side of the battery assembly 100. For example, the first vent hole VH1 may be disposed at the center of a bottom surface on a -Z direction side of the battery assembly 100.

A plurality of first vent holes VH1 may be provided. Each of the plurality of first vent holes VH1 may be provided to correspond to each of the plurality of battery cells 110 included in the battery assembly 100.

Second vent holes VH2 may be disposed outside the first vent holes VH1 in the battery assembly 100. The second vent holes VH2 may be disposed outside the first vent holes VH1 on the first side of the battery assembly 100. For example, the second vent holes VH2 may be respectively disposed at longitudinal opposite ends of the battery assembly 100, on a bottom surface on the -Z direction side of the battery assembly 100.

As described above, when the vent hole VH includes the first vent holes VH1 and the second vent holes VH2, the vent holes VH may be distributed at various positions of the battery assembly 100, allowing the vent gas VG to be discharged more smoothly in the event of a thermal event.

Referring to FIGS. 3 and 5, the venting unit 310 may include first venting portions 311, second venting portions 312, and third venting portions 313. In the following description, referring to FIGS. 3 and 5 in combination may help better understand the explanation.

The first venting portions 311 may be in communication with the first vent holes VH1. For example, in the first venting portions 311, the vent gas VG discharged from the first vent holes VH1 of the battery assembly 100 may flow.

According to an embodiment, the cooling and venting member 300 may include first communication holes 341. The first communication holes 341 may be holes that allow communication between the first vent holes VH1 and the first venting portions 311. The first communication holes 341 may be provided to correspond to the first vent holes VH1. With one first venting portion 311, either the first vent holes VH1 of one battery assembly 100 or each of a plurality of battery assemblies 100 may be in communication.

The second venting portions 312 may be in communication with the second vent holes VH2. For example, in the second venting portions 312, the vent gas VG discharged from the second vent holes VH2 of the battery assembly 100 may flow.

According to an embodiment, the cooling and venting member 300 may include second communication holes 342. The second communication holes 342 may be holes that allow communication between the second vent holes VH2 and the second venting portions 312. The second communication holes 342 may be provided to correspond to the second vent holes VH2. With one second venting portion 312, either the second vent holes VH2 of one battery assembly 100 or each of a plurality of battery assemblies 100 may be in communication therewith.

According to an embodiment, the third venting portions 313 may be in communication with the first venting portions 311 and the second venting portions 312. The third venting portions 313 may connect the first venting portions 311 and the second venting portions 312. For example, in the third venting portions 313, the vent gas VG flowing through the first venting portions 311 and the vent gas VG flowing through the second venting portions 312 may be merged.

According to an embodiment, the cooling and venting member 300 may include a third communication hole 343. The third communication hole 343 may be in communication with the third venting portions 313. The third communication hole 343 may be in communication with the outside of the battery pack 10. For example, the vent gas VG flowing through the third venting portions 313 may be discharged to the outside through the third communication hole 343. The third communication hole 343 may allow communication between the third venting portions 313 and a venting device 700, which will be described later. A plurality of third communication holes 343 may be provided.

As described above, when the venting unit 310 includes the first venting portions 311, the second venting portions 312, and the third venting portions 313, the vent gas VG may be discharged from various positions of the battery assembly 100, allowing more effective venting. In addition, the vent gas VG may be smoothly guided to be discharged to the outside of the battery pack 10.

The cooling unit 320 may be disposed between the first venting portions 311 and the second venting portions 312. For example, at least a portion of the cooling unit 320 may be disposed between the first venting portions 311 and the second venting portions 312. For example, referring to the configuration illustrated in FIGS. 5 and 6, the cooling unit 320 may be disposed in a spaced region between the first venting portions 311 and the second venting portions 312, which are spaced apart from each other in the Y-axis direction or the X-axis direction.

In this case, the first venting portions 311, the cooling unit 320, the second venting portions 312, the cooling unit 320, and the first venting portions 311 may be sequentially arranged, which allows the venting and cooling of the battery assembly 100 to be performed more uniformly, and enables the venting unit 310 and the cooling unit 320 to be more efficiently arranged. In addition, since both the first venting portions 311 and the second venting portions 312 may be disposed adjacent to the cooling unit 320, the vent gas VG flowing from each of the first venting portions 311 and the second venting portions 312 may be effectively cooled.

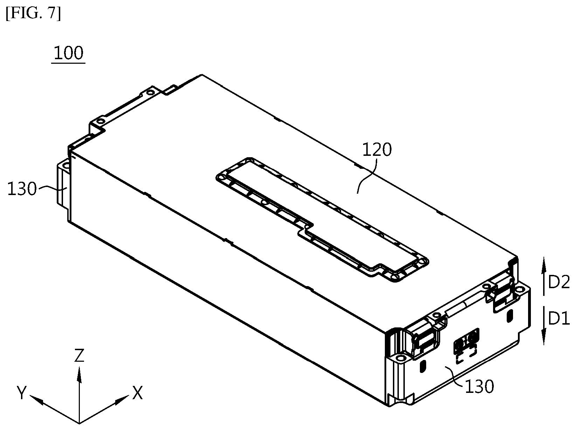

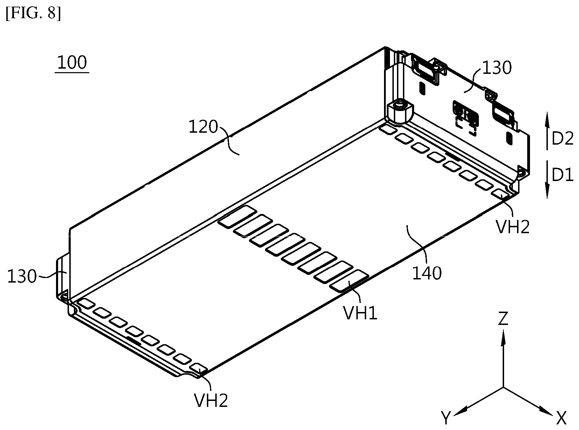

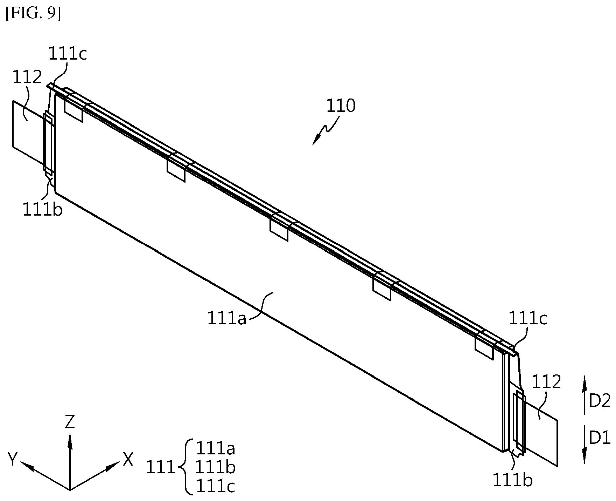

FIG. 7 is a perspective view illustrating the overall structure of a battery assembly 100 according to an embodiment of the present disclosure, FIG. 8 is a perspective view illustrating the battery assembly 100 according to an embodiment of the present disclosure as viewed from a different direction, and FIG. 9 is a perspective view illustrating the overall structure of a battery cell 110 according to an embodiment of the present disclosure.

Hereinafter, a detailed description will be given of the battery assembly 100 according to an embodiment of the present disclosure with reference to FIGS. 3 and 7 to 9.

In the following description, for the sake of convenience, only the battery assembly 100, which has a predetermined width, length, and height in the X-axis, Y-axis, and Z-axis directions, and the battery cell 110 provided in the battery assembly 100, will be described.

The battery assembly 100 may include a battery cell 110, an assembly housing 120, end plates 130, and a bottom unit 140.

The assembly housing 120 may have one side (*e.g.*, the first direction D1 side) open and may have a substantially U-shaped cross-section. A plurality of battery cells 110 may be accommodated inside the assembly housing 120.

The end plates 130 may cover opposite sides of the battery assembly 100. For example, the end plates 130 may cover opposite sides of the battery assembly 100 in the Y-axis direction.

The bottom unit 140 may cover the open side of the assembly housing 120. For example, the bottom unit 140 may be disposed on the first direction side D1 of the assembly housing 120. For example, the bottom unit 140 may cover the -Z-axis side of the battery assembly 100.

The vent holes VH may be formed in the bottom unit 140. The assembly housing 120 and the end plates 130 may have a sealed structure. Accordingly, when a thermal event occurs in the battery cell 110 and vent gas VG is discharged, the vent gas VG may not be discharged through the assembly housing 120 in the second direction D2 or through the end plates 130. The vent gas VG may be guided to be discharged only through the bottom unit 140 where the vent holes VH are formed. Therefore, the vent gas VG in the battery assembly 100 may be guided to be discharged only in the first direction D1. Here, since the first direction D1 may be a downward direction, according to the above configuration, the venting of the battery assembly 100 or the battery pack 10 may be mainly performed in the downward direction, rather than in the upward or horizontal direction.

A plurality of battery cells 110 may be stacked and arranged inside the battery assembly 100. For example, the plurality of battery cells 110 may be stacked along the width direction (X-axis direction) of the battery assembly 100 in a vertically standing state (*e.g.*, in the Z-axis direction).

The battery cell 110 according to an embodiment of the present disclosure may include a cell case 111, as illustrated in FIG. 9.

An electrode assembly in which a positive electrode, a negative electrode, and a separator are stacked may be accommodated in the cell case 111. The cell case 111 may include a housing portion 111a, sealing portions 111b, and folding portions 111c. The electrode assembly may be accommodated in the housing portion 111a. The sealing portions 111b are portions where a peripheral edge of the housing portion 111a is at least partially sealed. For example, when the housing portion 111a has a substantially rectangular shape, the sealing portions 111b may be provided on three side portions among the four side portions of the peripheral edge of the housing portion 111a and may not be provided on one side portion (the -Z direction side). The folding portions 111c are portions where the sealing portions 111b are partially folded and may be provided, for example, on the other side portion (the +Z direction side) of the housing portion 111a. Electrode leads 112 are electrically connected to the electrode assembly and, according to an embodiment, may be configured to protrude toward opposite sides of the battery cell 110 (*e.g.*, opposite sides in the Y-axis direction). In addition, the electrode leads 112 may be configured to protrude in one direction rather than toward opposite sides of the battery cell 110.

On the side portions of the folding portions 111c opposite to the sealing portions 111b of the battery cell 110, so-called the "bat ears" or the "dog ears" may be formed to be slightly protruded outward. The second vent holes VH2 formed in the bottom unit 140 of the battery assembly 100 may be formed to correspond to the bat ears or the dog ears.

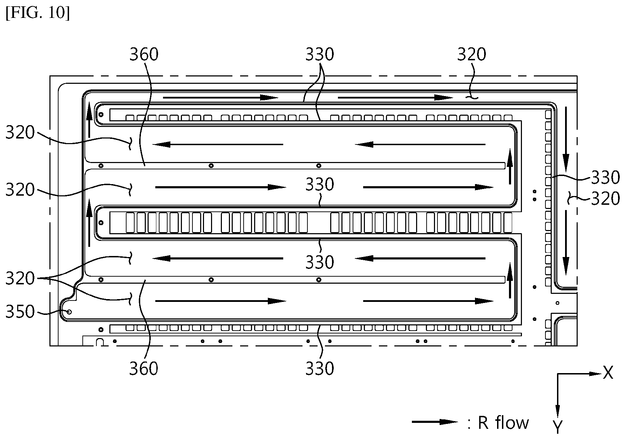

FIG. 10 is an enlarged bottom view of a portion of the cooling unit 320 of the cooling and venting member 300 according to an embodiment of the present disclosure, illustrating the flow of the cooling medium.

Hereinafter, the cooling and venting member 300 according to an embodiment of the present disclosure will be described in more detail with reference to FIG. 10. According to an embodiment, the cooling and venting member 300 may further include a second partition wall 360.

The second partition wall 360 may be configured to change the flow direction of the cooling medium R. The second partition wall 360 may be understood as having a configuration different from that of the first partition wall 330. For example, the first partition wall 330 may be understood as a configuration disposed between the venting unit 310 and the cooling unit 320 so as to physically divide the venting unit 310 and the cooling unit 320, whereas the second partition wall 360 may be understood as being provided inside the cooling unit 320 so as to change the flow direction of the cooling medium R.

The second partition wall 360 may protrude in the first direction D1, like the first partition wall 330. According to an embodiment, the thickness of the protruding second partition wall 360 may be the same as that of the first partition wall 330.

The second partition wall 360 may be formed to extend in one direction. The second partition wall 360 may be elongated to pass through the plurality of battery assemblies 100. For example, in the configuration illustrated in FIG. 10, when a plurality of battery assemblies 100 are stacked in the X-axis direction, the second partition wall 360 may be configured in an elongated shape extending along the stacking direction of the battery assemblies 100, below the battery assemblies 100.

A gap may be formed between one end of the second partition wall 360 and the first partition wall 330, and the flow direction of the cooling medium R may be changed at the gap. For example, as illustrated in FIG. 10, the +X direction end of the second partition wall 360 may be spaced apart from the first partition wall 330, such that a gap is formed therebetween, and the flow direction of the cooling medium R may be changed from the +X direction to the -X direction at the gap.

At the opposite end of the second partition wall 360, the flow paths of the cooling medium R in the cooling unit 320 may be partitioned from each other. For example, as illustrated in FIG. 10, the -X-direction end of the second partition wall 360 may be configured in a blocked form so as to separate the cooling unit 320 located in the -Y direction from the cooling unit 320 located in the +Y direction.

Meanwhile, the second partition wall 360 may guide the flow of the cooling medium R.

In this way, when the cooling and venting member 300 includes the second partition wall 360, the flow direction of the cooling medium R in the cooling unit 320 may be formed in various ways. In addition, the cooling effect may be enhanced by increasing the flow path length for the cooling medium R in the cooling unit 320. Furthermore, the flow path for the cooling medium R may be formed to pass through all of the plurality of battery assemblies 100.

Meanwhile, the cooling and venting member 300 may include a cooling medium port 350 through which the cooling medium R may enter or exit. A plurality of cooling medium ports 350 may be provided. Among the plurality of cooling medium ports 350, one may be configured as an inlet through which the cooling medium R enters the cooling unit 320, and the other may be configured as an outlet through which the cooling medium R exits the cooling unit 320.

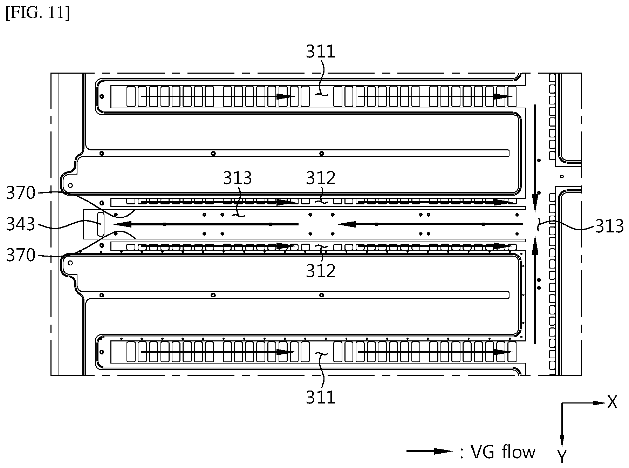

FIG. 11 is an enlarged bottom view of a portion of the venting unit 310 of the cooling and venting member 300 according to an embodiment of the present disclosure, illustrating the flow of the vent gas.

Hereinafter, the cooling and venting member 300 according to an embodiment of the present disclosure will be described in more detail with reference to FIG. 11.

According to an embodiment, the cooling and venting member 300 may further include a third partition wall 370. The third partition wall 370 may be configured to increase the flow distance of the vent gas VG. For example, the third partition wall 370 may guide the vent gas VG discharged from the second venting portions 312 to move in a direction opposite to a third communication hole 343, rather than directly toward the third communication hole 343, thereby increasing the flow distance of the vent gas VG from the second venting portions 312 to the third communication hole 343.

The third partition wall 370 may be understood as having a configuration different from that of the first partition wall 330. For example, as described above, while the first partition wall 330 is disposed between the venting unit 310 and the cooling unit 320, the third partition wall 370 may be understood as being provided inside the venting portions 310 so as to increase the flow distance of the vent gas VG. The third partition wall 370 may be provided between the second venting portions 312 and the third venting portions 313.

The third partition wall 370 may protrude in the first direction D1, like the first partition wall 330. According to an embodiment, the thickness of the protruding third partition wall 370 may be the same as that of the first partition wall 330.

The third partition wall 370 may be elongated between the second venting portions 312 and the third venting portions 313. For example, the third partition wall 370 may be configured in a form elongated in the X-axis direction.

The second venting portions 312 and the third venting portions 313 may be blocked from each other at a position relatively close to the third communication hole 343 by the third partition wall 370. For example, as illustrated in FIG. 11, the -X direction end of the third partition wall 370 may be formed in a closed shape so as to block the second venting portions 312 located on the -Y direction side and the third venting portions 313 located on the +Y direction side of the third partition wall 370. As a result, at a position relatively close to the third communication hole 343 (*e.g.*, the -X direction side), the second venting portions 312 and the third communication hole 343 may be blocked from each other.

The second venting portions 312 and the third venting portions 313 may be connected to each other at a position relatively far from the third communication hole 343 by the third partition wall 370. For example, as illustrated in FIG. 11, the +X direction end of the third partition wall 370 may be formed in an open shape so as to connect the second venting portions 312 located on the -Y direction side and the third venting portions 313 located on the +Y direction side of the third partition wall 370 to each other. As a result, at a position relatively far from the third communication hole 343 (*e.g.*, the +X direction side), the second venting portions 312 and the third venting portions 313 may be connected to each other.

When the cooling and venting member 300 includes the third partition wall 370 as described above, the flow path of the vent gas VG may be increased, so that the flow energy of the vent gas VG may be more effectively reduced.

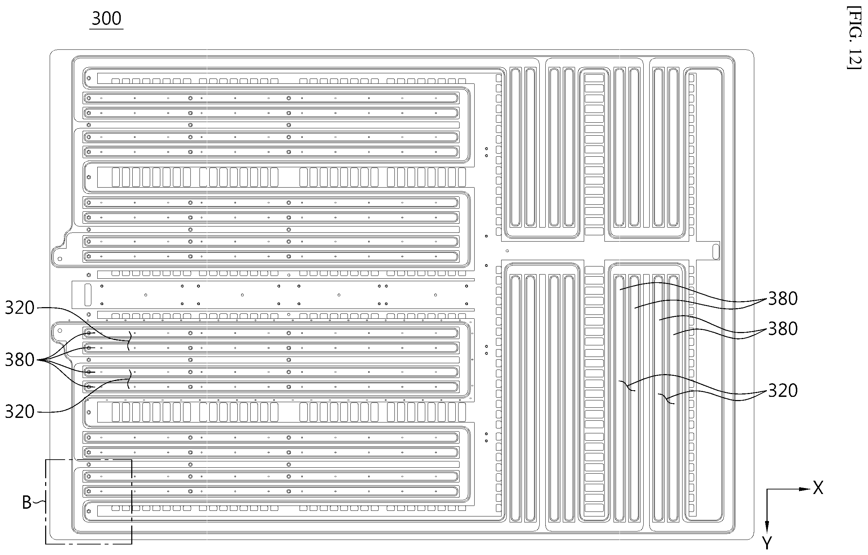

FIG. 12 is a bottom view illustrating a cooling and venting member 300 according to a modification of the present disclosure.

Hereinafter, with reference to FIG. 12, a detailed description will be given of the cooling and venting member 300 according to the modification of the present disclosure. The cooling and venting member 300 according to the modification of the present disclosure may further include a fourth partition wall 380.

The fourth partition wall 380 may divide a flow path of the cooling medium R in the cooling unit 320.

The fourth partition wall 380 may be disposed inside the cooling unit 320. A plurality of fourth partition walls 380 may be provided inside the cooling unit 320.

The fourth partition walls 380 may protrude in the first direction D1, like the first partition wall 330. The thickness of the protruding fourth partition walls 380 may be the same as that of the first partition wall 330.

The fourth partition walls 380 may be formed to be elongated. The fourth partition walls 380 may be elongated to pass through a plurality of battery assemblies 100. For example, in the configuration illustrated in FIG. 12, when some of the plurality of battery assemblies 100 are stacked in the X-axis direction, the fourth partition walls 380 may be configured in an elongated shape extending along the stacking direction of the battery assemblies 100, below the battery assemblies 100. In addition, for example, in the configuration illustrated in FIG. 12, when the remaining ones of the plurality of battery assemblies 100 are stacked in the Y-axis direction, the fourth partition walls 380 may be configured in an elongated shape extending along the stacking direction of the battery assemblies 100, below the battery assemblies 100.

When the cooling and venting member 300 further includes the fourth partition walls 380, the number of flow paths of the cooling medium R may be increased, and thus the cooling medium R may be more uniformly distributed to various positions of the cooling unit 320.

Meanwhile, in the above description, the venting unit 310 and the cooling unit 320 of the cooling and venting member 300 may be closed in the first direction D1. For example, in FIGS. 1 to 12, for the convenience of description, the venting unit 310 and the cooling unit 320 of the cooling and venting member 300 are illustrated as being open in the first direction D1. However, the present disclosure is not limited thereto, and for example, in the cooling and venting member 300 according to the present disclosure, the venting unit 310 and the cooling unit 320 may be implemented in a form closed in the first direction D1.

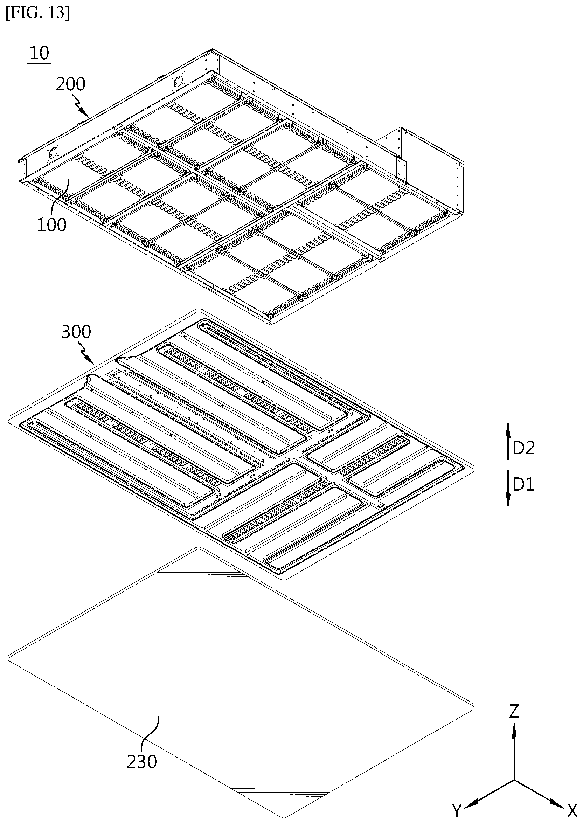

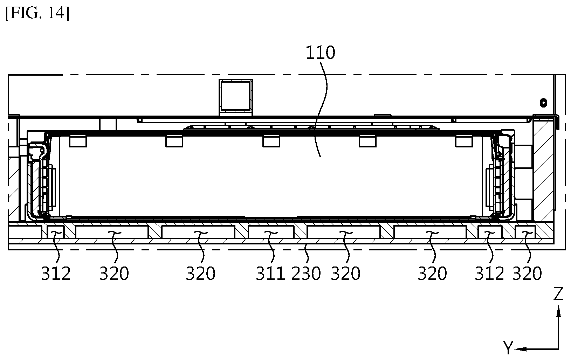

FIG. 13 is an exploded perspective view illustrating a battery pack 10 according to another embodiment of the present disclosure, and FIG. 14 is a side cross-sectional view illustrating a portion in which the venting unit 310 and the cooling unit 320 are illustrated in the battery pack 10 according to another embodiment of the present disclosure.

Hereinafter, with reference to FIGS. 13 and 14, a battery pack 10 according to another embodiment of the present disclosure will be described in detail.

The pack case 200 of the battery pack 10 according to another embodiment of the present disclosure may include a bottom plate 230. In the battery pack 10 according to another embodiment of the present disclosure, the cooling and venting member 300 may be provided in a form opened in a first direction D1.

The bottom plate 230 may be disposed on a first direction D1 side of the cooling and venting member 300. For example, the bottom plate 230 may be disposed below the cooling and venting member 300 and may face a bottom portion of the cooling and venting member 300. The bottom plate 230 may be disposed in close contact with the cooling and venting member 300. The bottom plate 230 may cover a portion of the cooling and venting member 300 that opens in the first direction D1.

When the pack case 200 includes the bottom plate 230, the venting unit 310 and the cooling unit 320 may be covered by the bottom plate 230, enabling the portions of the venting unit 310 and the cooling unit 320 opened in the first direction D1 to be effectively closed by the bottom plate 230. Accordingly, a flow path of vent gas VG in the venting unit 310 and a flow path of the cooling medium in the cooling unit 320 may be more reliably partitioned and defined.

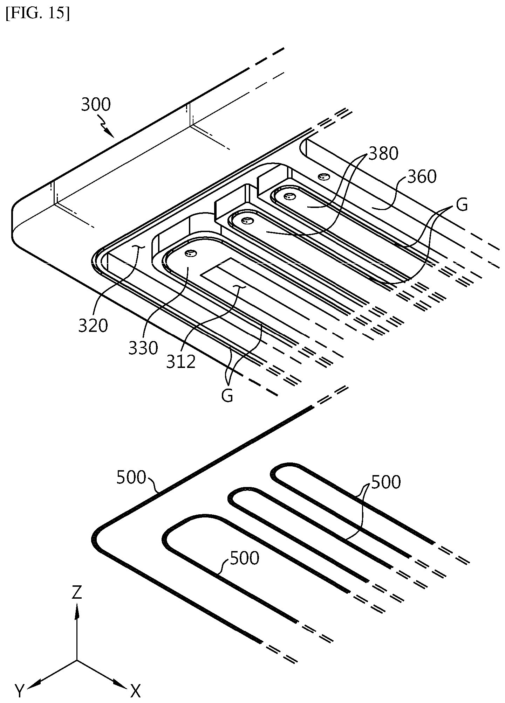

FIG. 15 is an enlarged perspective view of region B of FIG. 12, illustrating a state where sealing members are disassembled.

Referring to FIG. 15, a sealing member 500 may be disposed on at least one of the first partition wall 330, the second partition wall 360, and the fourth partition wall 380.

The sealing member 500 may be provided, for example, in the form of a rubber ring. The material and type of the sealing member 500 are not limited thereto.

A groove G into which the sealing member 500 may be inserted may be formed in at least one of the first partition wall 330, the second partition wall 360, and the fourth partition wall 380. The sealing member 500 may be disposed between the cooling and venting member 300 and the bottom plate 230.

When the sealing member 500 is disposed on the first partition wall 330, a space between the venting unit 310 (*e.g.*, the second venting portion 312) and the cooling unit 320 may be effectively sealed. When the sealing member 500 is disposed on the second partition wall 360 or the fourth partition wall 380, flow paths of the cooling medium R in the cooling unit 320 may be more effectively partitioned or divided.

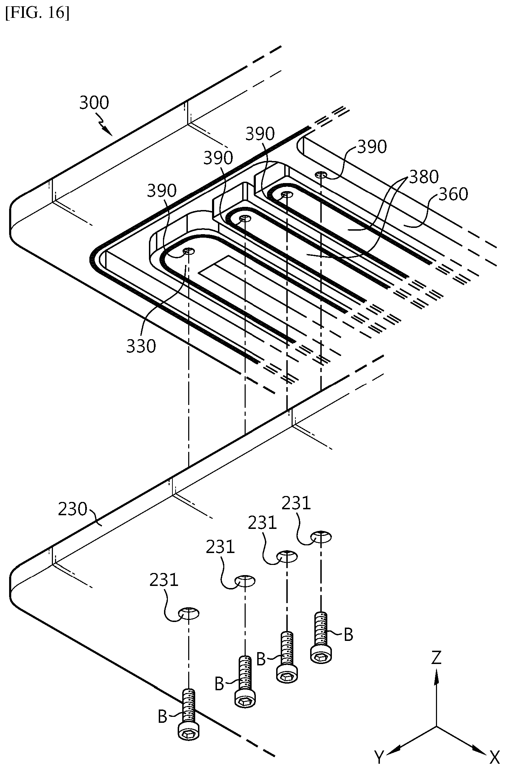

FIG. 16 is an enlarged perspective view of region B of FIG. 12, illustrating a state in which the bottom plate 230 is bolted to the cooling and venting member 300.

Referring to FIG. 16, the cooling and venting member 300 and the bottom plate 230 may be bolted to each other. A fastening groove 390 may be formed in at least one of the first partition wall 330, the second partition wall 360, and the fourth partition wall 380. A fastening hole 231 corresponding to the fastening groove 390 may be formed in the bottom plate 230. A fastening member B may pass through the fastening hole 231 to be fastened to the fastening groove 390. The fastening member B may be, for example, a bolt.

Meanwhile, a sealing member 500 described above may be disposed around the fastening groove 390. The sealing member 500 may seal around the fastening groove 390.

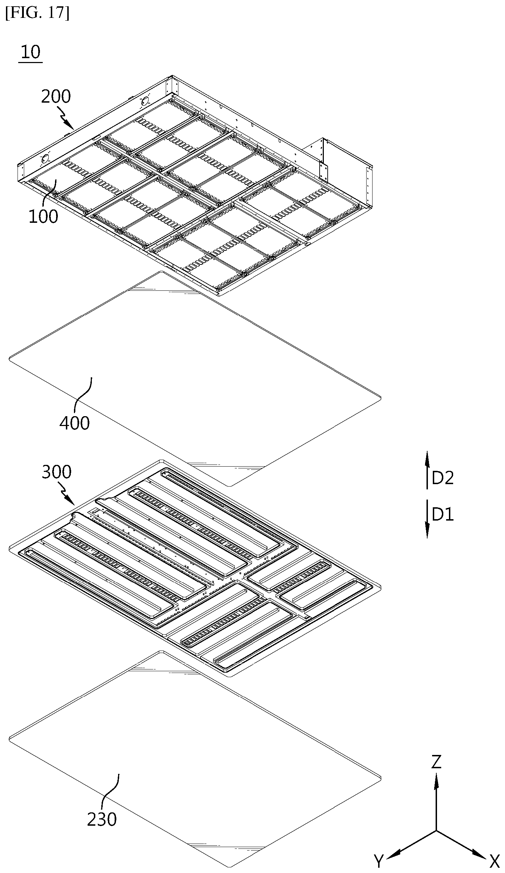

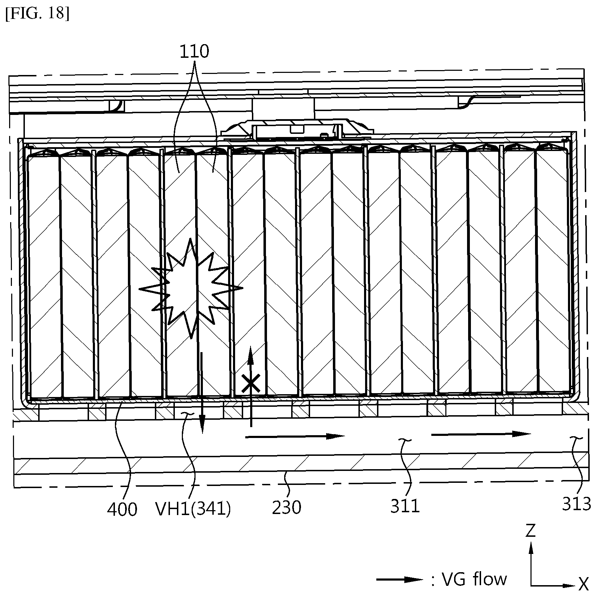

FIG. 17 is an exploded perspective view illustrating a battery pack 10 according to another embodiment of the present disclosure, and FIG. 18 is a side cross-sectional view illustrating the flow of vent gas when a thermal event occurs in the battery pack 10 according to another embodiment of the present disclosure.

Hereinafter, with reference to FIGS. 17 and 18, the battery pack 10 according to another embodiment of the present disclosure will be described in detail. The battery pack 10 according to another embodiment of the present disclosure may further include a flame-retardant sheet 400.

The flame-retardant sheet 400 may include a heat-resistant material. Here, the heat-resistant material refers to a material having high heat resistance or flame resistance, and various materials, such as mica, may be applied. The flame-retardant sheet 400 may be disposed between the battery assembly 100 and the cooling and venting member 300.

As such, when the battery pack 10 further includes the flame-retardant sheet 400, backflow of vent gas VG may be effectively suppressed or prevented. For example, when a thermal event occurs in a specific battery cell 110 and vent gas VG is discharged, only a portion of the flame-retardant sheet 400 corresponding to the battery cell 110 may be ruptured, while the other portions may remain intact. Accordingly, the vent gas VG discharged from the battery cell 110 may be effectively suppressed or prevented from flowing back into other battery cells 110.

For example, as illustrated in FIG. 18, when the vent gas VG discharged from a specific battery cell 110 ruptures the flame-retardant sheet 400 and flows into the first venting portion 311 through the first vent hole VH1 and the first communication hole 341, the vent gas VG may flow toward the third venting portion 313 with the flame-retardant sheet 400 preventing the vent gas VG from flowing back into other battery cells 110.

For the convenience of description, FIG. 18 illustrates only the first vent hole VH1 and the first venting portion 311. However, when vent gas VG released from a specific battery cell 110 ruptures the flame-retardant sheet 400 and flows into the second venting portion 312 through the second vent hole VH2 and the second communication hole 342, the vent gas VG may flow toward the third venting portion 313 with the flame-retardant sheet 400 preventing the vent gas VG from flowing back into other battery cells 110.

Meanwhile, the flame-retardant sheet 400 may be individually provided only at a portion corresponding to the first vent hole VH1 or the second vent hole VH2 so as to cover only the first vent hole VH1 or the second vent hole VH2.

In addition, the flame-retardant sheet 400 may include a tear line or a pre-formed tear line so as to be easily ruptured by the vent gas at the first vent hole VH1 or the second vent hole VH2, and the tear line or pre-formed tear line may be formed through, for example, a notching process.

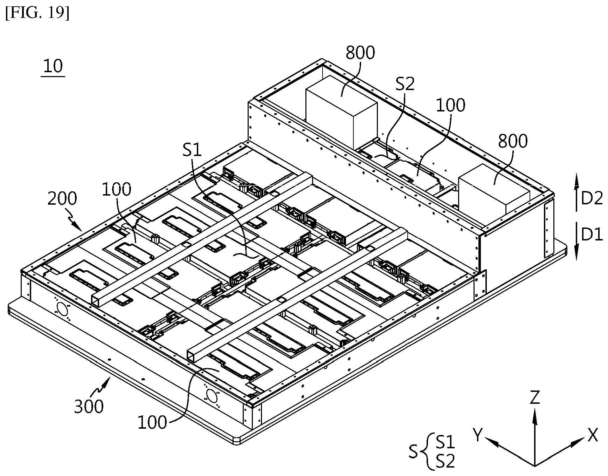

FIG. 19 is a perspective view illustrating a state in which a pack cover is removed from a battery pack according to an embodiment of the present disclosure.

The battery pack 10 according to the present disclosure may further include one or more electric components 800. The electric components 800 may be various devices for controlling charging and discharging of the battery cells 110, such as a battery management system (BMS), a current sensor, or a fuse. For the convenience of description, the electric components 800 are illustrated in FIG. 19 by way of example, but the electric components 800 are not limited thereto and may be implemented in various configurations and structures. In addition, the electric components 800 may be installed outside, rather than inside, the battery pack 10.

The electric components 800 may be disposed on a second direction D2 side of the battery assembly 100. For example, the cooling and venting member 300 may be disposed on a first direction D1 side of the battery assembly 100, and the electric component 800 may be disposed on a side opposite to the cooling and venting member 300 with respect to the battery assembly 100. For example, the cooling and venting member 300 may be disposed below the battery assembly 100, and the electric component 800 may be disposed above the battery assembly 100.

An accommodation space S formed inside the pack case 200 may include a first accommodation space S1 and a second accommodation space S2.

The first accommodation space S1 may be understood as a space in which the battery assemblies 100 are accommodated.

The second accommodation space S2 may be understood as a space in which the electric components 800, rather than the battery assemblies 100, are accommodated. The second accommodation space S2 may be disposed on a second direction D2 side of the battery assemblies 100. Accordingly, the electric components 800 may be accommodated on the second direction D2 side of the battery assemblies 100.

When the electric components 800 are disposed as described above, it becomes difficult for high-temperature vent gas VG guided to the cooling and venting member 300 to flow into the electric components 800. As a result, damage to the electric components 800 due to high temperatures may be effectively suppressed or prevented.

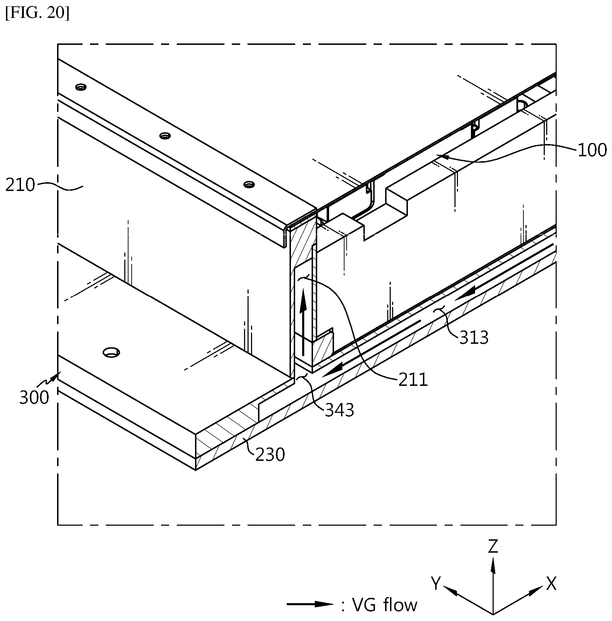

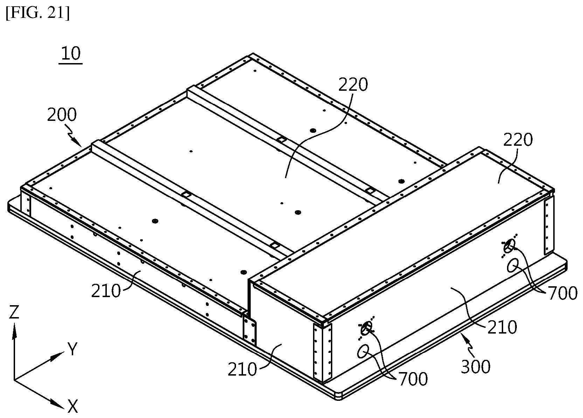

FIG. 20 is a cross-sectional perspective view illustrating a side channel 211 in a battery pack 10 according to an embodiment of the present disclosure, and FIG. 21 is a perspective view illustrating the battery pack shown in FIG. 1 from another direction.

Hereinafter, with reference to FIGS. 1 and 21, a venting device 700 of the battery pack 10 according to an embodiment of the present disclosure will be described in detail.

The battery pack 10 according to an embodiment of the present disclosure may further include a venting device 700. The venting device 700 may be configured to allow communication between the venting unit 310 and the outside. The venting device 700 may be configured to allow the vent gas VG to be discharged to the outside.

The venting device 700 may be in the form of a simple hole penetrating the pack case 200, or alternatively, it may be configured to remain closed under normal conditions and open only when a change in pressure or temperature, for example, occurs inside the pack case 200.

The venting device 700 may be provided on a side wall 210. For example, the venting device 700 may be provided on the side wall 210 on the -X direction side.

A side channel 211 may be formed inside the side wall 210 on which the venting device 700 is provided. The side channel 211 may allow communication between the venting device 700 and a third venting portion 313. The side channel 211 and the third venting portion 313 may be in communication with each other through a third communication hole 343.

In this manner, when the battery pack 10 further includes the venting device 700, vent gas VG inside the battery pack 10 may be more smoothly discharged to the outside.

Meanwhile, referring to FIG. 21, the venting device 700 may also be provided on the side wall 210 on the +X direction side. In this case, the side channel 211 may be formed inside the side wall 210 on the +X direction side.

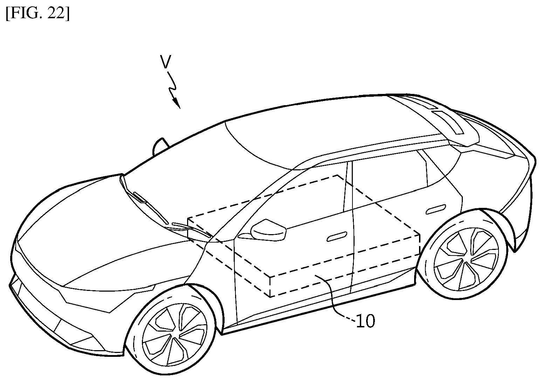

FIG. 22 is a view illustrating a vehicle according to an embodiment of the present disclosure.

Referring to FIG. 22, a battery pack 10 according to the present disclosure may be applied to a vehicle V, such as an electric vehicle or a hybrid vehicle. For example, the vehicle V according to the present disclosure may include the battery pack 10 according to the present disclosure. The battery pack 10 may be installed in a body frame below the vehicle seats or in a trunk space. In addition, the vehicle V according to an embodiment of the present disclosure may further include various other components included in a vehicle in addition to the battery pack 10. For example, the vehicle V according to an embodiment of the present disclosure may further include components such as a vehicle body, a motor, or a control unit such as an ECU (electronic control unit), in addition to the battery pack 10 according to an embodiment of the present disclosure.

In addition, it may well be possible that the battery pack 10 according to an embodiment of the present disclosure may be provided not only in a vehicle V but also in other devices, mechanisms, or facilities, such as an energy storage system (ESS) using a secondary battery.

In the present specification, terms indicating directions such as upper, lower, left, right, front, and rear are used merely for the convenience of description, and it will be apparent to those ordinarily skilled in the art that such terms may vary depending on the position of the object or the position of the observer.

While the present disclosure has been described above with reference to several embodiments and drawings, the present disclosure is not limited thereto, and various changes and modifications can be made by a person ordinarily skilled in the art to which the present disclosure pertains without departing from the technical spirit of the present disclosure and the equivalent scope of the claims to be described below.

### [Reference Signs]

10: battery pack
100: battery assembly
110: battery cell
111: cell case
111a: housing portion
111b: sealing portion
111c: folding portion
112: electrode lead
120: assembly housing
130: end plate
140: bottom unit
200: pack case
210: side wall
211: side panel
220: pack cover
230: bottom plate
231: fastening hole
300: cooling venting member
310: venting unit
311: first venting portion
312: second venting portion
313: third venting portion
320: cooling unit
330: first partition wall
341: first communication hole
342: second communication hole
343: third communication hole
350: cooling medium port
360: second partition wall
370: third partition wall
380: fourth partition wall
390: fastening groove
400: flame-retardant sheet
500: sealing member
600: fastening member
700: venting device
800: electric component
B: fastening member
D1: first direction
D2: second direction
G: groove
R: cooling medium
S: accommodation space
S1: first accommodation space
S2: second accommodation space
VG: vent gas
VH: vent hole
VH1: first vent hole
VH2: second vent hole
V: vehicle

## Claims

1. A battery pack comprising:
at least one battery assembly including a plurality of battery cells and having a vent hole on a first direction side;
a pack case in which an accommodation space configured to accommodate the battery assembly is formed; and
a cooling and venting member disposed on the first direction side of the battery assembly and including a venting unit configured to allow vent gas discharged from the vent hole to flow therethrough, and a cooling unit configured to cool the battery assembly.

2. The battery pack according to claim 1, wherein
the first direction is a downward direction.

3. The battery pack according to claim 1, wherein
the venting unit and the cooling unit are provided together in a single layer.

4. The battery pack according to claim 3, wherein
the venting unit and the cooling unit are alternately arranged in a region of the cooling and venting member corresponding to the battery assembly.

5. The battery pack according to claim 3, wherein
the cooling and venting member further includes a first partition wall that partitions the venting unit and the cooling unit.

6. The battery pack according to claim 5, wherein
the first partition wall protrudes in the first direction.

7. The battery pack according to claim 1, wherein
the venting unit and the cooling unit are integrally formed.

8. The battery pack according to claim 1, wherein
the vent hole includes a first vent hole disposed substantially at a central side of the battery assembly, and a second vent hole disposed outside of the first vent hole in the battery assembly.

9. The battery pack according to claim 8, wherein
the venting unit includes:
a first venting portion configured to communicate with the first vent hole,
a second venting portion configured to communicate with the second vent hole, and
a third venting portion configured to communicate with the first venting portion and the second venting portion.

10. The battery pack according to claim 9, wherein
the cooling unit is disposed between the first venting portion and the second venting portion.

11. The battery pack according to claim 1, wherein
the cooling and venting member further includes a second partition wall provided inside the cooling unit and configured to change a flow direction of a cooling medium.

12. The battery pack according to claim 1, wherein
the cooling and venting member further includes a third partition wall provided inside the venting unit and configured to increase a flow distance of vent gas.

13. The battery pack according to claim 1, wherein
the pack case includes a bottom plate disposed on a first direction side of the cooling and venting member.

14. The battery pack according to claim 1, further comprising:
a flame-retardant sheet disposed between the battery assembly and the cooling and venting member.

15. The battery pack according to claim 1, further comprising:
at least one electric component,
wherein the electric component is disposed on a second direction side of the battery assembly.

16. The battery pack according to claim 1, further comprising:
a venting device configured to allow communication between the venting unit and the outside.

17. A vehicle comprising at least one battery pack according to claim 1.
